# EUROPEAN PATENT APPLICATION

(11) **EP 1 072 487 A1**
(43) Date of publication of application: **31.01.2001**
(21) Application number: 00116318.7
(22) Date of filing: 27.07.2000
(51) Int. Cl.: B60R 25/04, B60R 25/02

(54) **A system for enabling the use of a motor vehicle**

(30) Priority: 30.07.1999 IT TO990672
(71) Applicant: FIAT AUTO S.p.A., 10135 Torino (IT)
(72) Inventor: Luca', Rosario, 10129 Torino (IT)
(74) Representative: Quinterno, Giuseppe

(57) **Abstract**

The system comprises: a locking device (12) associated with the steering column (13) and activated and deactivated by means of an electrically controlled actuator (11), an electric energy distributor enabled to operate by means of an electric enabling signal, a detector (10, 10') operable to detect an identification code associated with a portable device (2, 2'), a manually operable electrical supply switch (7), and an electronic processing and control unit (8) arranged to control the actuator device (11) to deactivate the steering lock device (12) and provide an enabling signal to the distributor (14) when the said electrical switch (7) is closed and the detected identification code corresponds to a predetermined code.

## Description

The present invention relates to a system for enabling the use of a motor vehicle.

In order to allow the proprietor or other authorised persons to use a motor vehicle, and to prevent theft, a conventional arrangement provides for the use of mechanical steering lock anti-theft devices which are manually activated and deactivated by means of the vehicle's ignition key. In relatively more recent times, for greater security, the ignition and starting key has been provided with a device carrying an identification code capable of being detected by a detector device associated with the ignition and starter switch, to enable or disable the starting of the vehicle in dependence on whether or not the code is recognised.

These arrangements, although effective, have the disadvantage of requiring a rather bulky and heavy combined ignition switch, steering lock and code recognition unit. These arrangements also have the disadvantage of requiring these units to be located close to the steering column.

The present invention seeks to provide a system for enabling the use of a motor vehicle which allows the disadvantages and inconveniences of the prior art arrangement to be overcome.

This and other objects are achieved according to the invention by a system the salient characteristics of which are defined in the annexed Claim 1.

Further characteristics and advantages of the invention will become apparent from the following detailed description given purely by way of non-limitative example with reference to the attached drawings, in which:
Figure 1 is a block diagram of a system for enabling the use of a motor vehicle according to the invention; and
Figure 2 is a block diagram of a variant embodiment.

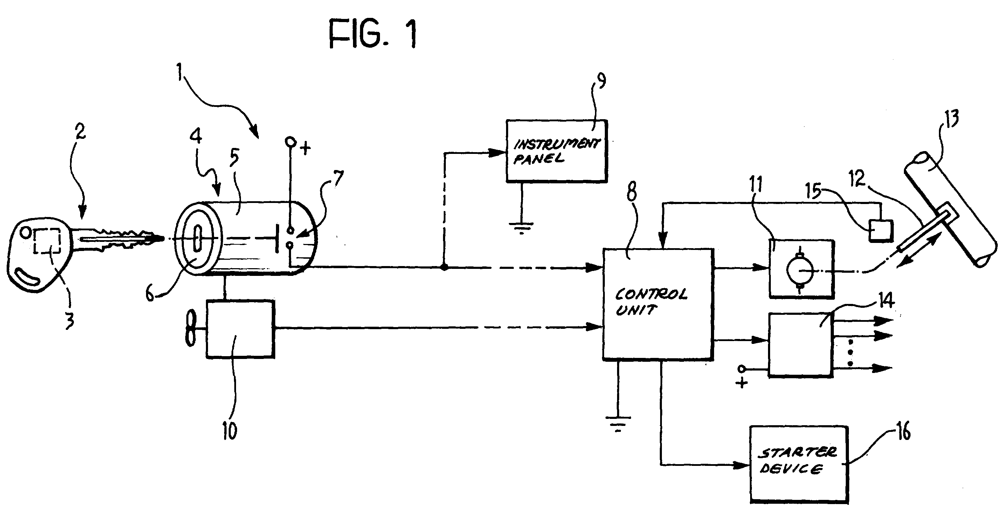

In Figure 1 the reference numeral 1 generally indicates a system according to the invention for enabling the use of a motor vehicle. This system comprises a key 2 in which is incorporated, in a manner known per se, a device 3 carrying an identification code.

The key 2 can be introduced into a switch 4 comprising a stator 5 and a rotor 6 turnable by means of the key.

Turning the rotor 6 by means of the key 2 causes closure of an electric switch 7 incorporated in the switch to connect the positive pole of the battery on board the motor vehicle to a supply input of the electronic control unit 8.

The switch 7 is further able, when closed, to provide supply voltage to the instrument panel 9 located in the motor vehicle dashboard.

The switch 4 has associated therewith a detector device 10 of type known per se, operable when the key 2 is inserted into the said switch to "read" the code memorised in the device 3 associated with this key. The detector device 10 is connected to an input of the control unit 8 which, after closure of the switch 7, is able to verify if the detected code corresponds to a pre-determined identification code.

In the case of positive recognition of the detected code, the control unit 8 commands an electric actuator 11, such as an electric motor, associated with a movable locking member 12, such as a bolt, to cause this latter to move from an active position (shown in Figure 1) in which it prevents rotation of the steering column 13, to an inactive position in which steering is allowed.

Following positive recognition of the identification code, the control unit 8 is further arranged to provide an enabling signal to a distributor device 14 the input of which is connected to the on-board battery and which has a plurality of outputs for the supply of various electrical loads and devices on board the motor vehicle.

Conveniently the locking member 12 has an associated position sensor 15 operable to provide the control unit 8 with a signal when the locking member 12 is in the inactive position. In the presence of this signal the control unit 8 emits a signal enabling the activation of a starter device 16 associated with the internal combustion engine of the motor vehicle.

The system for enabling the use of a motor vehicle described above with reference to Figure 1 has numerous advantages. In the first place the location of the switch 4 and the associated detector device 10 is released from the need to be located close to the steering lock device. This allows a greater freedom in design and gives advantages of greater ergonomic possibilities for the actuation of the switch.

A further advantage lies in the drastic structural simplification of the switch, which is no longer required to perform the electric distribution functions end the mechanical actuation of the steering lock device.

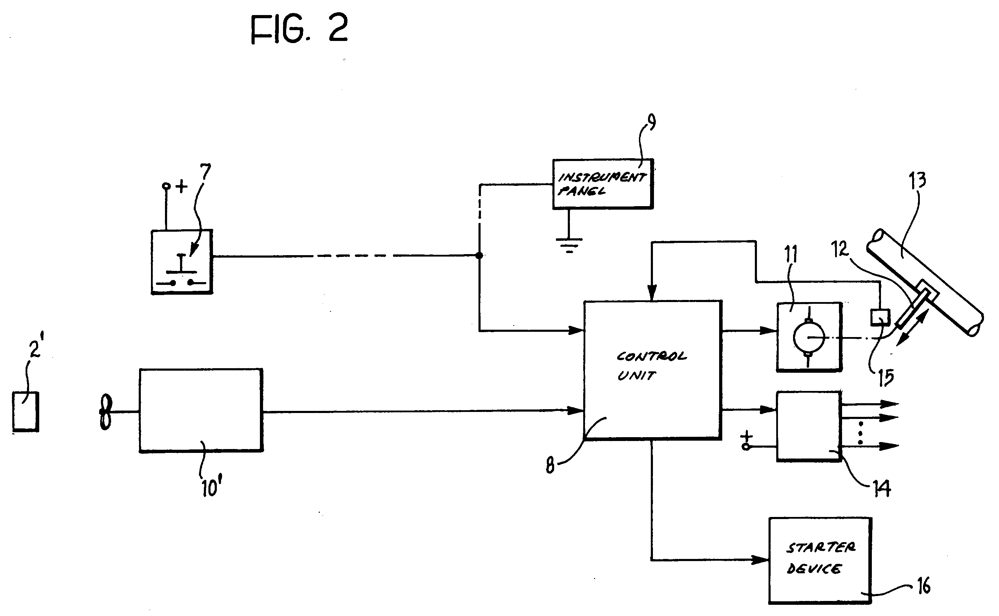

In Figure 2 there is shown a variant embodiment of the invention. In this figure the parts and elements already described have again been attributed the same reference numerals.

The system according to Figure 2 comprises a detector device 10' capable of detecting a code stored in a portable device 2', such as an magnetic or electronic card of passive or active type.

The detector device 10' is in particular arranged to allow detection of the code when the portable device 2' is located within a predetermined field outside the motor vehicle.

In the passenger compartment of a motor vehicle in an ergonomically convenient location, there is disposed a manually operable electric switch 7 for connecting the voltage source (on-board battery) to the supply input of the control unit 8 and possibly to the instrument panel 9.

When the control unit 8 is supplied and verifies that the code detected by the device 10' corresponds to a predetermined code it commands the actuator device to operate the release of the steering and enables the electric distributor 14.

As in the case of the system according to Figure 1, when the sensor 15 signals to the control unit 8 that the locking member 12 associated with the steering column 13 has reached its inactive position the control unit 8 can enable activation of the motor vehicle's engine starter device.

Naturally, the principle of the invention remaining the same, the embodiments and details of construction can be widely varied from those described and illustrated purely by way of non-limitative example, without by this departing from the ambit of the invention as described in the annexed claims.

## Claims

1. A system for enabling the use of a motor vehicle comprising,
a mechanical locking device (12) associated with the steering column (13) and activated and deactivated by an electrically controlled actuator (11),
electrical energy distribution means enabled to operate by means of an electrical enabling signal,
detector means (10, 10') operable to detect an identification code associated with a portable device (2, 2'),
a manually operable electrical supply switch (7), and
electronic processing and control means (8) connected to the said switch (7), to detector means (10, 10') to the said actuator (11) and to the distribution means (14), and arranged to control the said actuator device (11) to deactivate the steering lock device (12) and provide an enabling signal to the distributor means (14) when the said electric switch (7) is closed and the identification code detected corresponds to a predetermined code.

2. A system according to Claim 1, in which the said portable device (3) with which the identification code is associated is incorporated in a key (2), and the said electric switch (7) and detector means (10) are associated with a receiver part (4) which can be engaged and actuated by means of the said key (2).

3. A system according to Claim 1 in which the said portable device (2') is operable to allow detection of its identification code by the detector means (10') within a predetermined field outside the motor vehicle.

4. A system according to any preceding claim, in which the locking device associated with the steering column (13) comprises a locking member (12) displaceable between an active position and an inactive position in which it respectively prevents and allows steering movement; the system further including a sensor (15) operable to provide an enabling signal to electronic processing and control means (8) when the said locking member (12) is in the inactive position; the said processing and control means (8) being arranged to allow activation of a starter device (16) of the motor vehicle only when the said sensor (15) provides the said enabling signal.
